# EUROPÄISCHE PATENTANMELDUNG

(11) **EP 1 394 819 A2**
(43) Veröffentlichungstag der Anmeldung: **03.03.2004**
(21) Anmeldenummer: 03018781.9
(22) Anmeldetag: 28.08.2003
(51) Int. Cl.: H01B 9/00, B61H 13/34

(54) **Vorrichtung zur Verbindung einer elektromechanischen Bremszuspanneinrichtung einer Schienenfahrzeugbremse mit zugeordneten Steuer-, Signalgeber- und/oder Energieversorgungseinrichtungen**

(30) Priorität: 29.08.2002 DE 10239696
(71) Anmelder: KNORR-BREMSE Systeme für Schienenfahrzeuge GmbH, 80809 München (DE)
(72) Erfinder: Vohla, Manfred, 80995 München (DE)

(57) **Zusammenfassung**

Die Erfindung betrifft eine Vorrichtung zur Verbindung einer elektromechanischen Bremszuspanneinrichtung einer Schienenfahrzeugbremse mit zugeordneten Steuer-, Signalgeber- und/oder Energieversorgungseinrichtungen, beinhaltend mehrere elektrische Kabel und/oder Lichtwellenleiter.

Die Erfindung sieht vor, daß zumindest zwischen der Bremszuspanneinrichtung und einem Wagenkasten eines zugeordneten Wagens des Schienenfahrzeugs sämtliche elektrischen Kabel und/oder Lichtwellenleiter (104, 106, 108, 110, 112) in einem einzigen Integralkabel (102) zusammengefaßt sind, welches mit der Bremszuspanneinrichtung und/oder mit einem Anschluß am Wagenkasten lösbar verbunden ist.

## Beschreibung

### Stand der Technik

Die Erfindung geht aus von einer Vorrichtung zur Verbindung einer elektromechanischen Bremszuspanneinrichtung einer Schienenfahrzeugbremse mit zugeordneten Steuer-, Signalgeber- und/oder Energieversorgungseinrichtungen, beinhaltend mehrere elektrische Kabel mit wenigstens einem Leistungsversorgungskabel und wenigstens einem signalrührenden Kabel, nach der Gattung des Patentanspruchs 1.

Im wesentlichen werden derzeit im Schienenfahrzeugbereich drei Bremssysteme eingesetzt: Elektropneumatische Bremssysteme, elektrohydraulische Bremssysteme sowie elektromechanische Bremssysteme. Das Bremssystem kann dabei als aktives oder passives Bremssystem ausgeführt sein, je nachdem ob die Kraft eines Bremsaktuators zum Einbremsen (aktives Bremssystem) oder zum Lösen der Bremse (passives Bremssystem) aufgebracht werden muß. Für den Fall von Betriebsstörungen erfolgt bei elektropneumatischen Systemen eine Energiespeicherung in Druckluftbehältern, bei elektrohydraulischen Systemen in Hydrobehältern und bei elektromechanischen Systemen in Form von Speicherfedern.

Die DE 199 45 701 A1 beschreibt eine elektromechanische Bremszuspanneinrichtung für Schienenfahrzeuge mit einem Bremsaktuator, der eine Betriebsbremseinheit sowie eine Speicherbremseinheit mit einem Energiespeicher umfaßt. Die Betriebsbremseinheit beinhaltet einen Bremskrafterzeuger zum Zuspannen und/oder Lösen der Bremse in Form eines elektromotorischen Antriebs. Die Speicherbremseinheit umfaßt mindestens einen Energiespeicher zum Speichern und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Die Speicherbremseinheit ist im allgemeinen als Federspeicherbremse ausgebildet. Ein Kraftumsetzer sorgt für eine Umsetzung der vom Bremskrafterzeuger und/oder vom Energiespeicher abgegebenen Energie in eine Bremszuspannbewegung. Der elektromotorische Antrieb ist meist durch eine Regelungs- und Leistungselektronik zu schlupfgeregelten (Gleitschutzregelung) und/oder lastkorrigierten Bremsungen ansteuerbar.

Eine solche Bremszuspanneinrichtung ist üblicherweise an einem Drehgestell eines Wagens des Schienenfahrzeugs befestigt, so daß eine Reihe von elektrischen Kabeln vorhanden sind, um die Bremszuspanneinrichtung mit zugeordneten Steuer-, Signalgeberund/oder Energieversorgungseinrichtungen zu verbinden, welche nicht direkt in unmittelbarer Nachbarschaft der Bremszuspanneinrichtung angeordnet sind. Unter anderem werden durch diese Kabel beispielsweise folgende Funktionen übernommen:
- Die Energieversorgung des Leistungsteils der Bremszuspanneinrichtung zum Auf- bzw. zum Abbau der Zuspannkraft;
- die Energieversorgung der Steuerung und Regelung der Bremszuspanneinrichtung;
- die Übermittlung von Steuersignalen wie beispielsweise das momentane Bremsanforderungssignal, Signale zum Auslösen der Parkbremsfunktion, zum Auslösen der Hilfsbremsfunktion etc.;
- die Übermittlung von Sensorsignalen wie beispielsweise die Signale eines Impulsgebers zur Ermittlung der Raddrehzahl oder von Endlagenschaltern;
- die Übermittlung von Diagnosedaten, etc.

Dabei sind Leistungsversorgungskabel oder Energieversorgungskabel und signalführende Kabel getrennt voneinander verlegt und an mehreren Befestigungspunkten befestigt. Wegen Ihres Abstandes voneinander ist es außerdem nicht notwendig, sie gegeneinander abzuschirmen. Diese Art der Verkabelung ist jedoch relativ aufwendig und teuer. Insbesondere müssen bei einem Wechsel der Bremszuspanneinrichtung sämtliche Einzelkabel abgetrennt bzw. neu angeschlossen und auf die Zuordnung geachtet werden.

In der DE 201 14 231 U1 wird ein Versorgungskabel eines mehrachsigen Industrieroboters beschrieben, in welchem neben Lichtwellenleitern und elektrischen Kabeln auch ein Druckluftschlauch zur Leistungsversorgung von pneumatisch betätigten Aktoren geführt ist. Die DE 195 08 888 A1 offenbart eine flexible elektrische Starkstromleitung mit Energieadern und optischen Adern.

### Aufgabe

Der vorliegenden Erfindung liegt die Aufgabe zugrunde, eine Vorrichtung der eingangs erwähnten Art derart weiterzubilden, daß sie kostengünstig herzustellen und zu montieren ist. Außerdem soll eine einfache Montage bzw. Demontage der Bremszuspanneinrichtung möglich sein. Schließlich soll die Vorrichtung im Hinblick auf die große Sicherheitsrelevanz einer Bremszuspanneinrichtung eine sichere und dauerhaft zuverlässige Übertragung von Energie und Signalen ermöglichen.

Erfindungsgemäß wird diese Aufgabe durch die kennzeichnenden Merkmale des Anspruchs 1 gelöst.

### Vorteile der Erfindung

Indem erstmals vorgeschlagen wird, sämtliche Einzelkabel zwischen einer Bremszuspanneinrichtung einer Schienenfahrzeugbremse und den zugeordneten Steuer-, Signalgeber- und/oder Energieversorgungseinrichtungen in einem Integralkabel zusammenzufassen, muß nur noch dieses einzige Kabel verlegt werden, wodurch die Montagekosten signifikant sinken. Solche Integralkabel sind mit einer bestimmten Anzahl von Leistungsversorgungskabeln und signalführenden Kabeln äußerst günstig vorfertigbar und dann auch für Schienenfahrzeuge mit unterschiedlichen Bremsanlagen verwendbar.

Wegen der Einzelabschirmung der elektrischen Kabel wird gegenseitige Interferenz verhindert, insbesondere, dass die relativ hohen elektromagnetischen Felder der Energieversorgungskabel die sich auf einem elektrisch wesentlich niedrigeren Niveau befindenden Signale der signalübertragenden Kabel beeinflussen können.

Ein solches Integralkabel kann außerdem durch sämtliche Kabel umfassende Steckverbindungen an die Bremszuspanneinrichtung und/oder an die Steuer-, Signalgeberund/oder Energieversorgungseinrichtungen angeschlossen werden, ohne daß hierfür Fachwissen über die Zuordnung und Funktion der einzelnen Kabel notwendig wäre. Weiterhin kann die Bremszuspanneinrichtung selbst durch Lösen einer solchen Steckverbindung schnell und einfach demontiert und ausgewechselt werden, ohne daß Manipulationen an den Kabelverbindungen durchgeführt werden müßten. Schließlich ist ein solches Integralkabel kompakt und spart Bauraum.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform der Erfindung kann zusätzlich wenigstens ein Lichtwellenleiter in das Integralkabel integriert sein. Weiterhin sind sämtliche elektrischen Kabel und der wenigstens eine Lichtwellenleiter innerhalb eines Kabelmantels des Integralkabels geführt. Auf diese Weise kann auf Kabelbinder zum Verbinden der einzelnen Kabelstränge verzichtet werden und das Integralkabel bildet eine leicht handzuhabende Einheit.

Bevorzugt ist der Kabelmantel mit einer eigenen Abschirmung versehen, wobei zumindest einige der innerhalb des Kabelmantels geführten elektrischen Kabel und der wenigstens eine Lichtwellenleiter zusätzlich jeweils eine eigene Ummantelung aufweisen können. Die gemeinsame Abschirmung der ganz oder teilweise bereits abgeschirmten Einzelkabel erhöht die Funktionssicherheit der Bremse.

Eine Weiterbildung sieht vor, daß der Kabelmantel faserverstärkt ist, beispielsweise durch Metall- oder Karbonfasern oder ein Metallgestrick. Dies ist besonders dann von Vorteil, wenn das zumeist frei verlegte Integralkabel hohen mechanischen Belastungen wie beispielsweise Steinschlag ausgesetzt ist.

Beispielweise beinhaltet das Integralkabel das wenigstens eine Leistungsversorgungskabel und eines oder mehrere der folgenden Kabel: Impulsgebersignal- und Versorgungskabel, Feldbuskabel, Steuerleitungen zur Ansteuerung und Versorgung einer elektrischen Hilfslöseeinrichtung, Steuerleitungen zur Ansteuerung und Versorgung einer Park- und Sicherheitsbremseinheit.

### Zeichnungen

Ausführungsbeispiele der Erfindung sind in den Zeichnungen dargestellt und in der nachfolgenden Beschreibung näher erläutert. In den Zeichnungen zeigt:
- Fig. 1: eine schematische Darstellung einer elektromechanischen Bremszuspanneinrichtung;
- Fig.2: eine schematische Darstellung eines bevorzugten Ausführungsbeispiels einer Verbindung der Bremszuspannvorrichtung von Fig. 1 mit einem an einem Wagenboden angeordneten Klemmkasten mittels eines erfindungsgemäßen Integralkabels;
- Fig.3: einen Querschnitt durch das Integralkabel von Fig.2;
- Fig.4: einen Querschnitt durch ein weiteres Integralkabel.

### Beschreibung der Ausführungsbeispiele

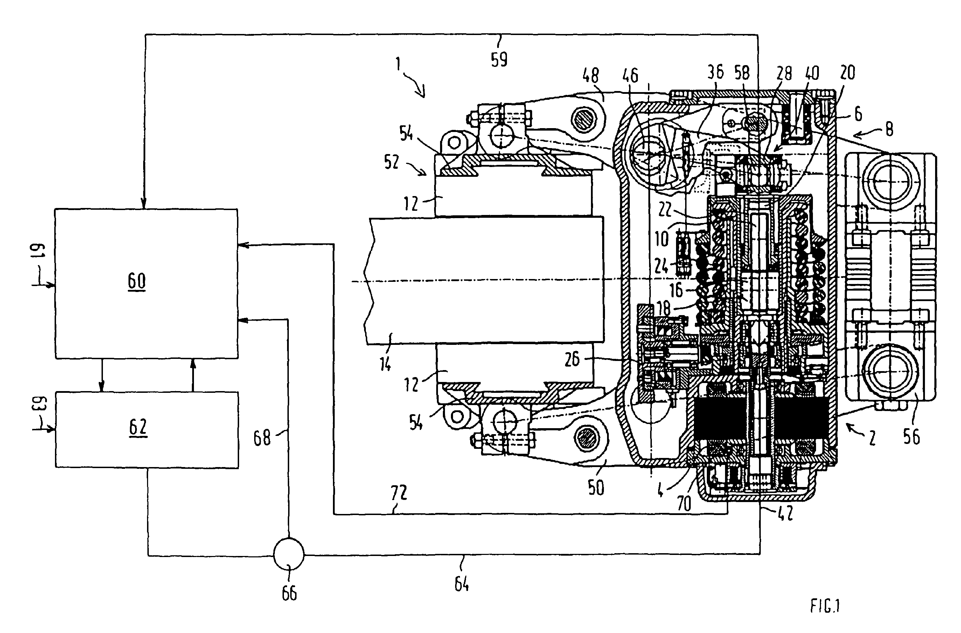

Die in Fig. 1 insgesamt mit 1 bezeichnete, bevorzugte Ausführungsform einer elektromechanischen Bremszuspanneinrichtung bildet eine von mehreren Bremszuspanneinrichtungen eines Schienenfahrzeugs, beispielsweise einer S-Bahn. Die Bremszuspanneinrichtung 1 beinhaltet einen Bremsaktuator 2 mit einer Betriebsbremseinheit und einer Speicherbremseinheit. Die Betriebsbremseinheit hat einen elektrischen Antrieb, beispielsweise einen elektrischen Stellmotor 4, der in einem Aktuatorgehäuse 6 des Bremsaktuators 2 untergebracht ist. Ein mechanischer Kraftumsetzer 8 dient zur Umsetzung der vom Bremsaktuator 2 abgegebenen Energie in eine Bremszuspannbewegung.

Der Stellmotor 4 versetzt eine koaxiale Bremsspindel 10 in Drehung, welche durch den Kraftumsetzer 8 in eine Bremszuspannbewegung von Bremsbelägen 12 in Richtung auf eine Wellenbremsscheibe 14 gewandelt werden. Der Kraftumsetzer 8 umfaßt unter anderem eine Mutter-/Spindel-Baueinheit 16 mit einer auf der Bremsspindel 10 drehbar gelagerten Spindelmutter 18, welche bei Drehung der Bremsspindel 10 Linearbewegungen in Richtung der Spindelachse 42 ausführen kann. Das vom Stellmotor 4 abgewandte Ende der Bremsspindel 10 ragt in einen zylindrischen Hohlabschnitt eines Pleuels 20 hinein, der mit der Spindelmutter 18 dreh und axialfest verbunden ist. Außerdem ist der zylindrische Hohlabschnitt des Pleuels 20 in einer Schiebehülse 22 dreh- und axialfest gehalten, auf welche wenigstens eine sich am Aktuatorgehäuse 6 abstützende Speicherfeder 24 wirkt. Die Speicherfeder 24 ist Teil der Speicherbremseinheit und dient als Energiespeicher zum Speichern und Abgeben von Energie zum Zuspannen der Bremse als betriebliche Notbremse im Sinne einer unterlegten Sicherheitsebene bei Ausfall der Betriebsbremseinheit und/oder als Park- oder Feststellbremse. Sowohl die Betriebs- als auch die Speicherbremseinheit wirken auf den Pleuel 20. In Bremslösestellung ist die Speicherfeder 24 durch eine Verriegelungseinrichtung 26 in der vorgespannten Stellung gehalten.

Ein Pleuelkopf 28 des Pleuels 20 ragt aus der Schiebehülse 22 heraus und ist an einem Bremshebel 36 mittels eines Gelenks 40 senkrecht zur Spindelachse 42 angelenkt. Bei Antrieb der Bremsspindel 10 in Bremszuspannrichtung bzw. bei Lösen der Verriegelungseinrichtung 26 der Speicherfeder 24 wird aufgrund des dann axial ausfahrenden Pleuels 20 ein Gelenkbolzen des Gelenks 40 unter anderem durch im wesentlichen senkrecht zur Bolzenachse angreifende Scherkräfte beansprucht.

Das andere Ende des Bremshebels 36 wirkt auf eine Exzenteranordnung mit einer Exzenterwelle 46, die an einen Zangenhebel 48 angelenkt ist, der zusammen mit einem weiteren Zangenhebel 50 eine Bremszange 52 bildet. An den einen Enden der Zangenhebel 48, 50 sind jeweils Belaghalter 54 mit Bremsbelägen 12 angeordnet, die in Richtung der Achse der Wellenbremsscheibe 14 verschieblich sind. Die von den Bremsbelägen 12 abgewandt liegenden Enden der Zangenhebel 48, 50 sind miteinander über einen Druckstangensteller 56 verbunden, der vorzugsweise elektrisch betätigt ausgelegt ist. Die beschriebene Anordnung bildet ebenfalls einen Teil des Kraftumsetzers 8, der die vom Stellmotor 4 oder von der Speicherfeder 24 veranlaßten Ausfahrbewegungen des Pleuels 20 in eine Bremszuspannbewegung der Bremsbeläge 12 in Richtung auf die Bremsscheibe 14 wandelt.

Der Gelenkbolzen des Gelenks 40 wird vorzugsweise durch einen Scherkraftmeßbolzen 58 gebildet. Der Scherkraftmeßbolzen 58 ist mit wenigstens einem aus Maßstabsgründen nicht dargestellten Meßaufnehmer zur Messung von Größen versehen, aus welchen die an den Bremsbelägen 12 wirkende Bremskraft mittelbar oder unmittelbar ableitbar ist. In bevorzugter Ausführungsform wird der Meßaufnehmer durch Dehnmeßstreifen (DMS) gebildet, die am Umfang des Scherkraftmeßbolzens 58 vorzugsweise durch Klebung derart befestigt sind, daß sie den aufgrund der gegensinnig wirkenden Scherkräfte hervorgerufenen Scherverformungen des Scherkraftmeßbolzens 58 proportionale Signale erzeugen. Anstatt am Scherkraftmeßbolzen 58 oder zusätzlich hierzu können auch ein oder mehrere Dehnmeßstreifen am Bremshebel 36 angeordnet sein, um aus den Verformungen des Bremshebels 36 die Bremskräfte ableiten zu können.

In einer eine DMS-Brückenschaltung beinhaltenden Auswerteelektronik findet eine Umrechnung der Scherverformungssignale in Signale für die jeweils an den Bremsbelägen 12 wirkende Ist-Zuspannkraft statt, welche über eine Signalleitung 59 an eine Steuer- und Regeleinrichtung 60 weitergeleitet werden, um anhand eines Soll-Ist-Vergleichs eine Regeldifferenz zwischen einer Soll-Zuspannkraft und der Ist-Zuspannkraft zu berechnen. Die Bremskraft-Sollwertvorgabe orientiert sich beispielsweise am Erreichen einer geforderten Soll-Zuspannkraft in möglichst kurzer Zeit, beispielsweise 75% der maximalen Zuspannkraft in 0,3 Sekunden.

Die Steuer- und Regeleinrichtung 60 steuert ein Leistungsteil 62 an, welches in Abhängigkeit der berechneten Regeldifferenz einen Betriebsstrom für den Stellmotor 4 aussteuert, der durch einen an eine zwischen dem Leistungsteil 62 und dem Stellmotor 4 verlaufende elektrische Leitung 64 angeschlossenen Stromsensor 66 gemessen wird, wobei eine Rückmeldung an die Steuer- und Regeleinrichtung 60 durch ein entsprechendes, über eine Signalleitung 68 rückgeführtes Motorstromsignal erfolgt. Außer zur Einregelung einer Soll-Zuspannkraft dienen die in die Steuer- und Regeleinrichtung 60 eingesteuerten Signale für die Ist-Zuspannkräfte und für den jeweiligen Motorstrom zur Überwachung der Krafteinsteuerung und Funktionsfähigkeit der Bremszuspanneinrichtung 1 bei sicherheitsrelevanten Bremsungen. Zur Verifizierung der Meßergebnisse kann auch der antriebsseitig durch den Stromsensor 66 gemessene Motorstrom in der Steuer- und Regeleinrichtung 60 mit dem Signal für die Ist-Zuspannkraft abgeglichen werden.

Ein in der Motorwicklung des Stellmotors 4 angeordneter Temperatursensor 70 dient zur Temperaturüberwachung während des Betriebs und liefert über eine Signalleitung 72 entsprechende Signale an die Steuer- und Regeleinrichtung 60. Zusätzlich können weitere Temperatursensoren zur Temperaturüberwachung von einzelnen oder mehreren Komponenten der Bremszuspanneinrichtung 1 vorgesehen sein, beispielsweise ein Temperatursensor zur Messung der Temperatur des Leistungsteils 62. Darüber hinaus kann auch ein Temperatursensor zur Messung der Umgebungstemperatur Werte an die Steuerund Regeleinrichtung 60 liefern.

Die Bremszuspanneinrichtung 1 ist vorzugsweise zur Erzeugung von lastkorrigierten und/oder schlupfgeregelten Bremskräften ausgebildet, wobei unter einer lastkorrigierten Bremskraft eine im wesentlichen an das jeweils vorliegende Gewicht des Schienenfahrzeugs angepaßte Bremskraft und unter einer schlupfgeregelten Bremskraft eine Bremskraft verstanden werden soll, durch welche die Bremsung mit idealem Radschlupf erfolgt (Gleitschutzregelung). Hierzu weist Steuer- und Regeleinrichtung 60 entsprechende Regelfunktionen auf. Die Steuer- und Regeleinrichtung 60 und das Leistungsteil 62 sind vorzugsweise direkt an der Bremszange 52 angeordnet, in Fig. 1 aus Maßstabsgründen jedoch ein Stück weit entfernt von dieser gezeichnet. Die Steuer- und Regeleinrichtung 60 empfängt Steuersignale von einer zentralen Steuereinheit der S-Bahn über ein Kabel 61 und das Leistungsteil 62 steht durch ein Kabel 63 zur Leistungsversorgung mit dem Bordnetz in Verbindung. Alternativ hierzu könnten die Steuer- und Regeleinrichtung 60 und das Leistungsteil 62 aber auch fern der Bremszuspanneinrichtung 1 an einem Wagenkasten eines Wagens der S-Bahn angeordnet sein.

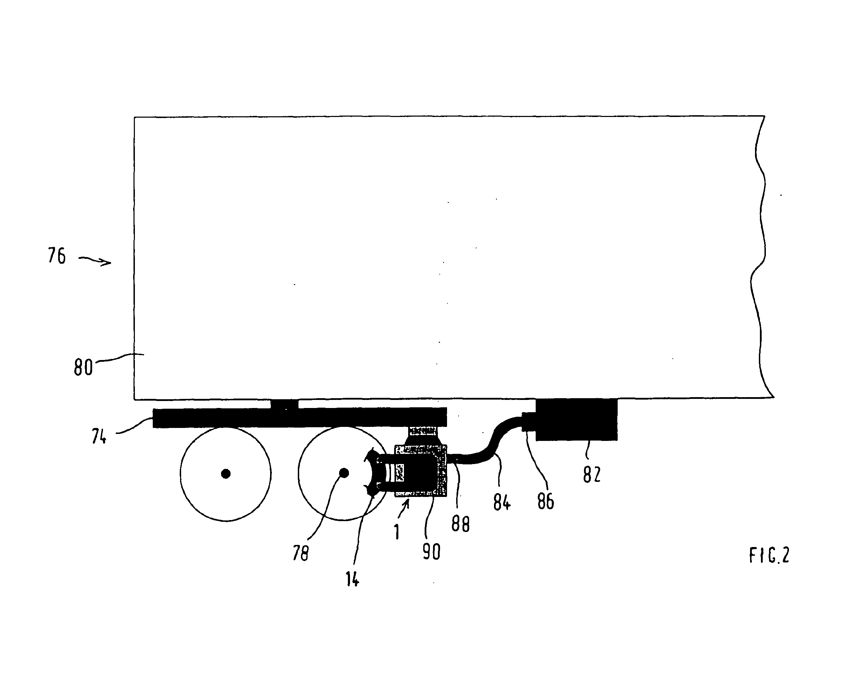

Wie Fig.2 zeigt, ist die Bremszuspanneinrichtung 1 an einem Drehgestell 74 eines Wagens 76 des Schienenfahrzeugs festgelegt, wobei die Bremsscheibe 14 mit einer am Drehgestell 74 gelagerten Achse 78 drehfest verbunden ist. Das Drehgestell 74 kann Dreh- und Vertikalbewegungen in Bezug zu einem Wagenkasten 80 des Wagens 76 ausführen. Eine energie- und/oder signalübertragende Verbindung der Bremszuspanneinrichtung 1 mit einem wagenkastenseitigen Anschluß 82, der mit zugeordneten Steuer-, Signalgeberund/oder Energieversorgungseinrichtungen im Wagen 76 oder in einem anderen Wagen in Kontakt steht, erfolgt durch Bewegungen des Drehgestells 74 tolerierende elektrische Kabel und/oder Lichtwellenleiter. Erfindungsgemäß sind zumindest zwischen der Bremszuspanneinrichtung 1 und dem Wagenkasten 80 des Wagens 76 sämtliche elektrischen Kabel und/oder Lichtwellenleiter in einem einzigen Integralkabel 84 zusammengefaßt, welches mit der Bremszuspanneinrichtung 1 und/oder mit dem wagenkastenseitigen Anschluß 82 lösbar verbunden ist. In bevorzugter Weise sind beispielsweise die Kabel 61 und 63 von Fig. 1 innerhalb des Integralkabels 84 geführt. Falls jedoch die Steuer- und Regelelektronik 60 und das Leistungsteil 62 fern von der Bremszuspanneinrichtung 1 an dem Wagenkasten 80 angeordnet sind, wird die Leitung 64 und die Signalleitung 72 in dem Integralkabel 84 geführt.

Vorzugsweise sind beide Enden des Integralkabels 84 sowohl wagenseitig als auch bremszuspanneinrichtungsseitig mittels je einer lösbaren Steck- oder Schraubverbindung 86, 88 anschließbar, wobei das Integralkabel 84 die Entfernung zwischen einem am Boden des Wagenkastens 76 angeordneten Klemmkasten 82 und einem Gehäuse 90 der Bremszuspanneinrichtung 1 überbrückt. Denkbar ist auch jegliche andere Art von lösbarer Verbindung. Die wagenseitige Steck- oder Schraubverbindung 86 kann beispielsweise durch einen Steckverbinder mit Schirmbügel und die bremszuspanneinrichtungsseitige Steckverbindung 88 durch einen Rundsteckverbinder realisiert sein. Wie beim Integralkabel 84, so sind auch bei den Steck- oder Schraubverbindungen 86, 88 sämtliche den einzelnen Kabeln und Leitungen zugeordneten Kontakte in jeweils einem einzigen Stecker bzw. in einer einzigen Buchse integriert. Alternativ könnte das Integralkabel 84 auch mittels einer zuggesicherten Kabeldurchführung in das Gehäuse 90 der Bremszuspanneinrichtung 1 oder in den Klemmkasten 82 münden. Entscheidend ist, daß mindestens eine lösbare Verbindung 86, 88 für das Integralkabel 84 vorhanden ist.

Der Klemmkasten 82 ist mit einer aus Maßstabsgründen nicht dargestellten Klemmenreihe versehen, in welche Enden von Kabeln und Leitungen münden, welche von den Steuer-, Signalgeber- und/oder Energieversorgungseinrichtungen hergeführt sind. Die einzelnen Klemmen der Klemmenreihe sind wiederum mit zugeordneten Kontakten der wagenseitigen lösbaren Verbindung 86 verbunden. Das Integralkabel 84 ist länger als die kürzeste Verbindung zwischen der bremszuspanneinrichtungsseitigen und der wagenseitigen lösbaren Verbindung 86, 88, um eine ungehinderte Bewegung des Drehgestells 74 in Bezug zum Wagenkasten 80 zu ermöglichen.

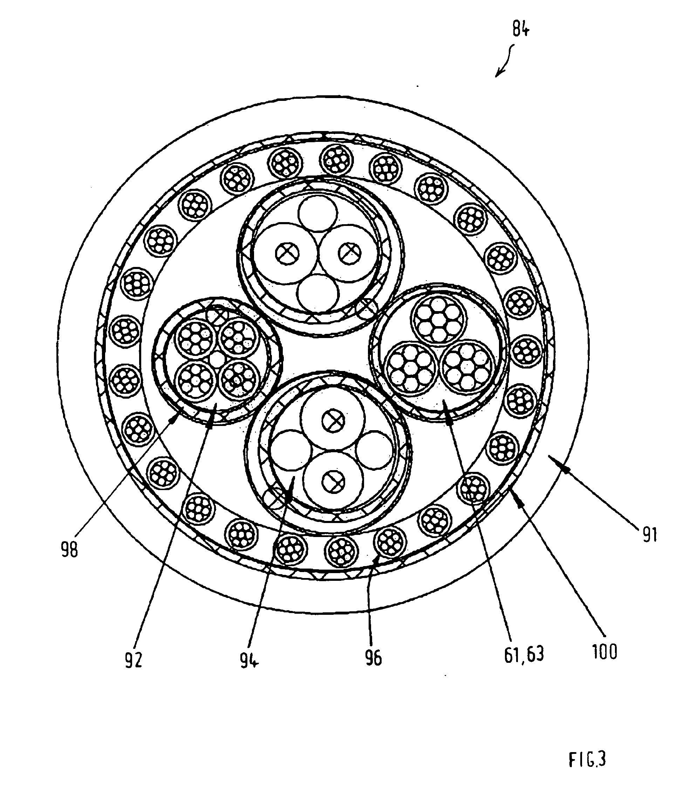

Das Integralkabel 84 kann beispielsweise durch Bündelung einzelner, etwa gleich langer Kabel mittels Kabelbinder realisiert sein, wobei die Enden jeweils mit einem männlichen oder weiblichen Steckkontakt versehen sind. Vorzugsweise sind sämtliche Einzelkabel jedoch innerhalb eines einzigen Integralkabelmantels 91 geführt, wie Fig.3 zeigt, in welcher eine bevorzugte Ausführungsform des Integralkabels 84 dargestellt ist. Wie bereits erwähnt, dient das Integralkabel 84 zur Leitung von Lichtwellen und analoger und/oder digitaler Signale, wobei in dem Integralkabel 84 beispielsweise folgende Einzelkabel oder Einzelleitungen zusammengefaßt sind:
- Impulsgebersignal- und Versorgungskabel 92 mit eigener Abschirmung, welche Signale eines an der Radnabe angeordneten Impulsgebers zur Drehzahlmessung des Rades sowie die für den Impulsgeber notwendige elektrische Energie übertragen,
- Feldbuskabel 94 eines CAN-Busses aus Kupfer mit eigener Abschirmung,
- Steuerleitungen 96 zum Auslösen von Sicherheits- und Parkbremsungen,
- die bereits in Fig. 1 dargestellten Kabel 61 und 63.

Wie aus Fig.3 hervorgeht, umfassen die innerhalb des Integralkabelmantels 91 geführten Kabel und Leitungen 61, 63, 92, 94, 96 selbst jeweils mehrere Einzelkabel, welche jeweils von einer eigenen Ummantelung 98 umgeben sind. Außerdem können die Kabel und Leitungen 61, 63, 92, 94, 96 auch jeweils eine eigene Abschirmung aufweisen.

Der Integralkabelmantel 91 ist vorzugsweise faserverstärkt, beispielsweise durch Metalloder Karbonfasern, weiterhin ist ein Metallgestrick zur Verstärkung denkbar. Die radial innere Fläche des Integralkabelmantels 91 ist mit einer durchgehenden Gesamtabschirmung 100 bedeckt, welche vorzugsweise aus geflochtenem und mit Vlies unterlegtem Abschirmmaterial besteht. Die Steuerleitungen 96 zum Auslösen von Sicherheits- und Parkbremsungen sind vorzugsweise längs der radial inneren Fläche der Gesamtabschirmung 100 mit Umfangsabstand angeordnet und umgeben die weiteren Kabel und Leitungen 61, 63, 92, 94. Da die in Fig. 1 schematisch dargestellte Steuer- und Regelelektronik 60 sowie das Leistungsteil 62 bevorzugt in unmittelbarer Nachbarschaft zur Bremszange 52 angeordnet ist, ist beispielsweise die Leitung 64 nicht Bestandteil des Integralkabels 84.

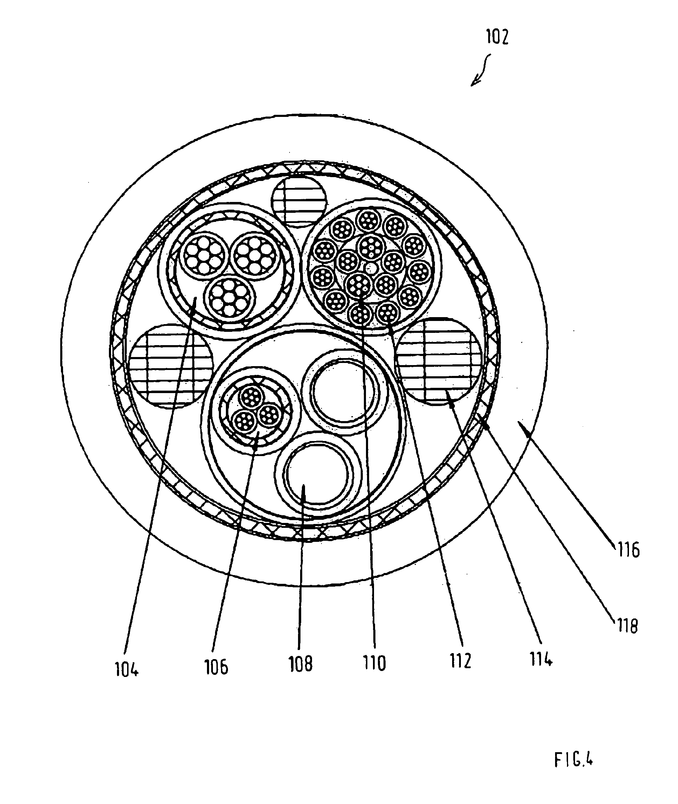

Eine weitere Ausführungsform eines Integralkabels 102 ist in Fig.4 dargestellt, wobei in dem Integralkabel 102 folgende Einzelkabel oder Einzelleitungen zusammengefaßt sind :
- Leistungsversorgungskabel 104 mit eigener Abschirmung,
- Impulsgebersignal- und Versorgungskabel 106 mit eigener Abschirmung,
- Feldbuskabel 108 als Lichtwellenleiter mit eigener Abschirmung,
- Steuerleitungen 110 zur Ansteuerung und Versorgung einer elektrischen Hilfslöseeinrichtung,
- Steuerleitungen 112 zum Auslösen von Sicherheits- und Parkbremsungen.

Für den Fall, daß die Steuer- und Regelelektronik 60 und das Leistungsteil 62 nicht wie bevorzugt an der Bremszange 52 sondern fern von dieser am Wagenkasten 80 angeordnet sind, können in dem Integralkabel 102 auch die Leitungen 59, 64 und 72 als elektrische Leitungen oder Lichtwellenleiter in das Integralkabel 102 integriert sein.

Um eine kompakte Bauform zu erzielen, sind die Kabel und Leitungen 104, 106, 108, 110, 112 möglichst dicht gepackt, wobei die Zwischenräume mit einem Füllmaterial 114 ausgegossen sind. Für den Integralkabelmantel 116 und die Gesamtabschirmung 118 gelten die Ausführungen betreffend die vorangehend beschriebene Ausführungsform. Zum zusätzlichen Schutz gegen mechanische Beschädigung kann der Integralkabelmantel 116 einen weiteren Schutzüberzug aufweisen, beispielsweise in Form eines Schutzschlauches, welcher auch in den Integralkabelmantel 116 selbst integriert sein kann. Sämtliche Kabel und insbesondere der Integralkabelmantel 116 bestehen aus einem Material, welches resistent gegenüber hohen Temperaturschwankungen, großen Verformungen, Schlag- und Schwingungsbelastung ist.

### Bezugszahlenliste

- 1: Bremszuspanneinrichtung
- 2: Bremsaktuator
- 4: Stellmotor
- 6: Aktuatorgehäuse
- 8: Kraftumsetzer
- 10: Bremsspindel
- 12: Bremsbelag
- 14: Bremsscheibe
- 16: Mutter-/Spindel-Baueinheit
- 18: Spindelmutter
- 20: Pleuel
- 22: Schiebehülse
- 24: Speicherfeder
- 26: Verriegelungseinrichtung
- 28: Pleuelkopf
- 36: Bremshebel
- 40: Gelenk
- 42: Spindelachse
- 46: Exzenterwelle
- 48: Zangenhebel
- 50: Zangenhebel
- 52: Bremszange
- 54: Belaghalter
- 56: Druckstangensteller
- 58: Scherkraftmeßbolzen
- 59: Signalleitung
- 60: Steuer- und Regeleinrichtung
- 61: Kabel
- 62: Leistungsteil
- 63: Kabel
- 64: elektrische Leitung
- 66: Stromsensor
- 68: Signalleitung
- 70: Temperatursensor
- 72: Signalleitung
- 74: Drehgestell
- 76: Wagen
- 78: Achse
- 80: Wagenkasten
- 82: Klemmkasten
- 84: Integralkabel
- 86: Steckverbindung
- 88: Steckverbindung
- 90: Gehäuse
- 91: Integralkabelmantel
- 92: Impulsgebersignal- und Versorgungskabel
- 94: Feldbuskabel
- 96: Steuerleitungen
- 98: Ummantelungen
- 100: Gesamtabschirmung
- 102: Integralkabel
- 104: Leistungsversorgungskabel
- 106: Impulsgeber- und Versorgungskabel
- 108: Feldbuskabel
- 110: Steuerleitungen
- 112: Steuerleitungen
- 114: Füllmaterial
- 116: Integralkabelmantel
- 118: Gesamtabschirmung

## Patentansprüche

1. Vorrichtung zur Verbindung einer elektromechanischen Bremszuspanneinrichtung einer Schienenfahrzeugbremse mit zugeordneten Steuer-, Signalgeber- und/oder Energieversorgungseinrichtungen (62), beinhaltend mehrere elektrische Kabel mit wenigstens einem Leistungsversorgungskabel (63; 104) und wenigstens einem signalführenden Kabel (61, 94, 96; 108, 110, 112), **dadurch gekennzeichnet, daß** zumindest zwischen der Bremszuspanneinrichtung (1) und einem Wagenkasten (80) eines zugeordneten Wagens (76) des Schienenfahrzeugs das wenigstens eine Leistungsversorgungskabel (63; 104) und das wenigstens eine signalführende Kabel (61, 94, 96; 108, 110, 112) in einem einzigen Integralkabel (84; 102) zusammengefaßt sind, wobei das wenigstens eine Leistungsversorgungskabel (63; 104) und/oder das wenigstens eine signalführende Kabel (61, 94, 96; 108, 110, 112) eine eigene Abschirmung aufweist bzw. aufweisen.

2. Vorrichtung nach Anspruch 1, **dadurch gekennzeichnet, daß** zusätzlich wenigstens ein Lichtwellenleiter in das Integralkabel (84; 102) integriert ist.

3. Vorrichtung nach Anspruch 2, **dadurch gekennzeichnet, daß** sämtliche elektrischen Kabel (61, 63, 92, 94, 96; 104, 106, 108, 110, 112) und der wenigstens eine Lichtwellenleiter innerhalb eines Kabelmantels (91; 116) des Integralkabels (84; 102) geführt sind.

4. Vorrichtung nach Anspruch 3, **dadurch gekennzeichnet, daß** der Kabelmantel (91; 116) mit einer eigenen Abschirmung (100; 118) versehen ist.

5. Vorrichtung nach Anspruch 3 oder 4, **dadurch gekennzeichnet, daß** zumindest einige der innerhalb des Kabelmantels (91; 116) geführten elektrischen Kabel (61, 63, 92, 94, 96; 104, 106, 108, 110, 112) und der wenigstens eine Lichtwellenleiter jeweils eine eigene Ummantelung (98) aufweisen.

6. Vorrichtung nach einem der Ansprüche 3 bis 5, **dadurch gekennzeichnet, daß** der Kabelmantel (91; 116) faserverstärkt und/oder metallgestrickverstärkt ist.

7. Vorrichtung nach einem der vorhergehenden Ansprüche, **dadurch gekennzeichnet, daß** das Integralkabel (84; 102) zur Leitung von Lichtwellen, analoger und/oder digitaler Signale vorgesehen ist.

8. Vorrichtung nach einem der vorhergehenden Ansprüche, **dadurch gekennzeichnet, daß** das Integralkabel (102) das wenigstens eine Leistungsversorgungskabel (104) und eines oder mehrere der folgenden Kabel beinhaltet: Impulsgebersignal- und Versorgungskabel (106), Feldbuskabel (108), Steuerleitungen (110) zur Ansteuerung und Versorgung einer elektrischen Hilfslöseeinrichtung, Steuerleitungen (112) zur Ansteuerung und Versorgung einer Park- und Sicherheitsbremseinheit.

9. Vorrichtung nach einem der vorhergehenden Ansprüche, **dadurch gekennzeichnet, daß** die Bremszuspanneinrichtung (1) an einem Drehgestell (74) des Wagens (76) und zumindest einige der Steuer-, Signalgeber- und/oder Energieversorgungseinrichtungen (62) in diesem und/oder in einem anderen Wagen angeordnet sind.

10. Vorrichtung nach Anspruch 9, **dadurch gekennzeichnet, daß** das Integralkabel (84; 102) zwischen einem Gehäuse (90) der Bremszuspanneinrichtung (1) und dem Wagenkasten (80) des zugeordneten Wagens (76) verläuft.

11. Vorrichtung nach Anspruch 10, **dadurch gekennzeichnet, daß** das Integralkabel (84; 102) mit der Bremszuspanneinrichtung (1) und/oder mit einem Anschluß (82) am Wagenkasten (80) lösbar verbunden ist.

12. Vorrichtung nach Anspruch 11, **dadurch gekennzeichnet, daß** beide Enden des Integralkabels (84; 102) mittels je einer lösbaren Verbindung (86, 88) befestigt sind.

13. Vorrichtung nach Anspruch 12, **dadurch gekennzeichnet, daß** an dem Wagenkasten (80) ein Klemmkasten (82) mit wenigstens einer Klemmenreihe festgelegt ist, in welche von den Steuer-, Signalgeber- und/oder Energieversorgungseinrichtungen (62) hergeführte Enden von Kabeln und Leitungen münden und welche der wagenseitigen lösbaren Verbindung (86) des Integralkabels (84; 102) zugeordnet ist.

14. Vorrichtung nach Anspruch 13, **dadurch gekennzeichnet, daß** der Klemmkasten (82) an einer Unterseite des Wagenkastens (80) angeordnet ist.
